# EUROPÄISCHE PATENTSCHRIFT

(11) **EP 2 166 244 B1**
(45) Veröffentlichungstag und Bekanntmachung des Hinweises auf die Patenterteilung: **30.03.2011**
(21) Anmeldenummer: 08016637.4
(22) Anmeldetag: 22.09.2008
(51) Int. Cl.: F16D 23/06

(54) **Synchronisiereinrichtung für ein Schaltgetriebe**
Synchronising device for gearbox
Dispositif de synchronisation pour un engrenage

(43) Veröffentlichungstag der Anmeldung: 24.03.2010
(73) Patentinhaber: Hoerbiger Antriebstechnik GmbH, 86956 Schongau (DE)
(72) Erfinder: Lollino, Marcello, 74172 Neckarsulm (DE)
(74) Vertreter: Kitzhofer, Thomas

(56) Entgegenhaltungen:
- WO-A-2004/005739
- DE-A1- 10 136 906
- JP-A- 58 174 725

## Beschreibung

Die Erfindung betrifft eine Synchronisiereinrichtung für ein Schaltgetriebe gemäß dem Oberbegriff des Anspruches 1.

Bei bisher bekannten Synchronisiereinrichtungen wird über eine Schalt- bzw. Schiebemuffe ein Synchronring auf einen Reibkonus eines Kupplungskörpers geschoben, der mit einem Losrad des Getriebes verdrehfest verbunden ist. Ist eine Drehzahlangleichung durch diesen Synchronisiervorgang erreicht, kann der Gang geschaltet werden.

Der bauliche Aufwand derartiger bekannter Synchronisiereinrichtungen ist aufgrund der Teileherstellungskomplexität relativ hoch.

Es ist daher Aufgabe der vorliegenden Erfindung, eine Synchronisiereinrichtung für Schaltgetriebe zu schaffen, die in ihrem Aufbau vereinfacht ist, wobei ferner eine Schaltkräftereduzierung erreichbar sein soll.

Die Lösung dieser Aufgabe erfolgt durch die Merkmale des Anspruchs 1.

Die erfindungsgemäße Synchronisiereinrichtung ergibt die Vorteile einer Fertigungsvereinfachung, einer Einbaumaßreduzierung und einer Schaltwegreduzierung. Ferner ergeben sich die Vorteile einer Gewichtsreduzierung und einer Schaltkräftereduzierung durch die Reduzierung der Schaltübersetzung.

Die Unteransprüche 2-9 haben vorteilhafte Weiterbildungen der Erfindung zum Inhalt.

In den Ansprüchen 10 und 11 ist ein erfindungsgemäßer Sperrschiebestein als selbstständig handelbares Objekt definiert.

Weitere Einzelheiten, Vorteile und Merkmale der vorliegenden Erfindung ergeben sich aus nachfolgender Beschreibung von Ausführungsbeispielen anhand der beigefügten Zeichnung. Es zeigt:
- Fig. 1: eine perspektivische Darstellung der Bauteile der erfindungsgemäßen Synchronisiereinrichtung,
- Fig. 2: eine perspektivische Darstellung der Schaltmuffe,
- Fig. 3: eine perspektivische Darstellung des Synchronringes,
- Fig. 4-6: perspektivische Darstellungen der Bauteile eines erfindungsgemäßen Sperrschiebesteins im zusammengebauten Zustand und in Einzeldarstellung,
- Fig. 7A-7D: Darstellungen des erfindungsgemäßen Sperrschiebesteins zur Erläuterung der Vorsynchron- und der Synchronphase der erfindungsgemäßen Synchronisiereinrichtung.

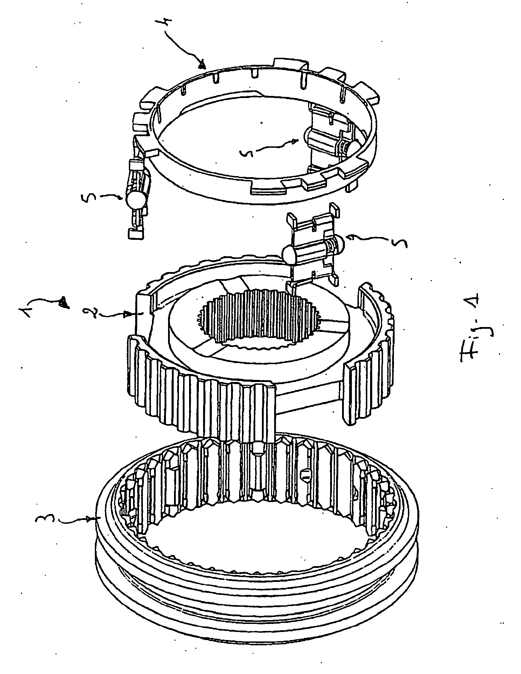

Gemäß Fig. 1 ist eine erfindungsgemäße Synchronisiereinrichtung 1 dargestellt, wobei in dieser Darstellung nur die Teile dargestellt sind, die zur Erläuterung der vorliegenden Erfindung erforderlich sind.

Die erfindungsgemäße Synchronisiereinrichtung weist jedoch, wie üblich, auch alle ansonsten erforderlichen Teile, wie beispielsweise die Losräder, auf, die jedoch für die Darstellung vorliegender Erfindung nicht erläutert werden müssen. Diese Teile sind dementsprechend bei vorliegender Beschreibung weggelassen.

Die Synchronisiereinrichtung 1 für ein Schaltgetriebe weist eine Führungsmuffe 2 auf, die auf einer nicht dargestellten Getriebewelle angeordnet ist. Auf der Führungsmuffe ist die in Fig. 1 sichtbare Schaltmuffe 3 angeordnet. Ein Synchronring 4 und drei Sperrschiebesteine 5, die mit dem Synchronring 4 und mit der Schaltmuffe 3 zusammenwirken, sind ebenfalls in Fig. 1 zu sehen.

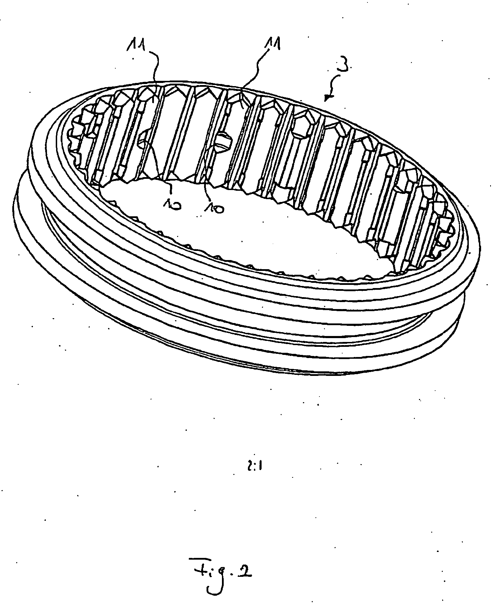

In der Fig. 2 ist eine Schaltmuffe 3 mit ihren Führungszähnen 11 zu sehen. In jedem Führungszahn 11 ist eine Rastiemut 10 eingeprägt.

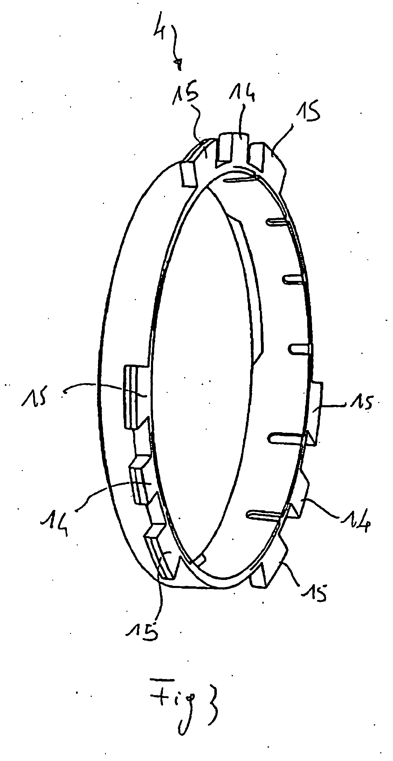

In der Fig. 3 sind Vorsynchronlaschen 14 und Synchronlaschen 15 eines Synchronringes 4 dargestellt, der mit der Schaltmuffe 3 zur Durchführung der Synchronisierung und des Schaltvorgangs zusammenwirkt. Die Laschen 14 und 15 sind hierbei an einer Stirnseite am Außenumfang und radial von diesem hervor ragend angeordnet. Ferner sind die Laschen 14, 15 in drei Dreiergruppen zusammengefasst, die winkelmäßig beabstandet zueinander vorgesehen sind.

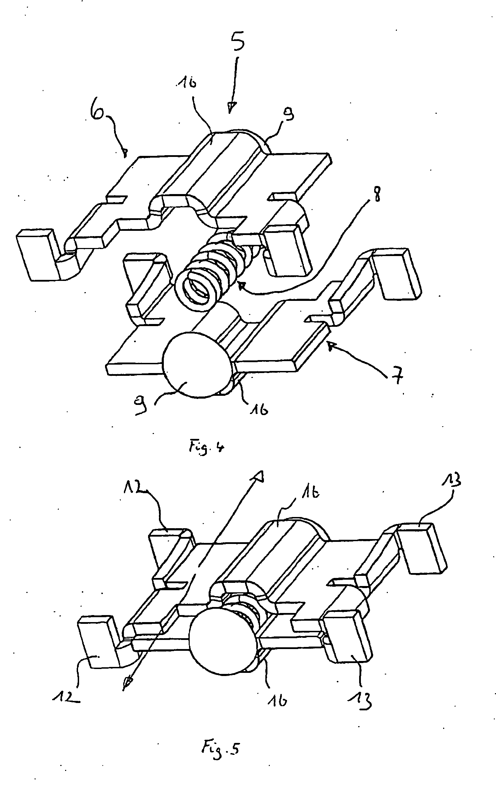

Die Schaltmuffe 3 ist mit zumindest einem Sperrschiebestein 5 versehen, der insbesondere aus der Einzeldarstellung der Fig. 4 und 5 ersichtliche Synchronplatten 6 und 7 aufweist. Die Synchronplatten 6 und 7 sind mittels eines Federelements 8 auseinandergedrückt gehalten und weisen jeweils eine Rastnase 9 auf, die in zugeordnete Rastiemuten 7 der Führungsverzahnung 11 der Schaltmuffe 3 eingreifen. Wie durch den Doppelpfeil der Fig. 5 veranschaulicht ist, sind die Synchronplatten 6 und 7 relativ zueinander entgegen der Federkraft beweglich geführt.

Der Sperrschiebestein 5 weist ferner vier Eingriffsnocken 12 und 13 auf, die jeweils an den Synchronplatten 6 bzw. 7, im Beispielsfalle einstückig, angeformt und blockartig ausgebildet sind.

Zur Aufnahme des Federelements 8 weisen beide Synchronplatten 6 bzw. 7 einen im Querschnitt, wie aus den Fig. 4 und 5 ersichtlich, kegelstumpfförmigen Mittelabschnitt 16 auf, der trogartig zwischen den seitlichen Bereichen der Synchronplatten 6 bzw. 7 zur Aufnahme des Federelements angeordnet ist, was insbesondere aus der Darstellung der Fig. 4 ersichtlich ist.

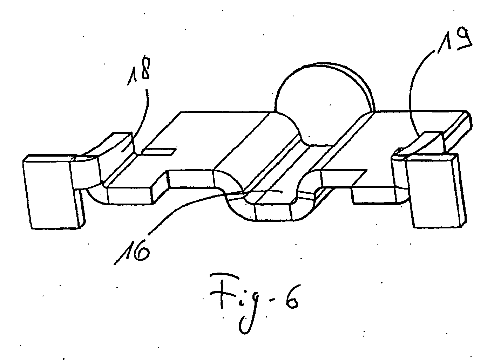

Aus der Fig. 6 ergibt sich ferner die von der Ebene der Seitenbereiche der Synchronplatten versetzte Anordnung einer Plattenführung 18-19, so dass diese dann gemäß Fig. 5 im zusammengefügten Zustand der Synchronplatten 6 und 7 in einer Ebene nebeneinander zum liegen kommen. Der Mittelabschnitt 16 ist auch in der Fig. 6 zu sehen.

Ferner ergibt sich insbesondere aus der Fig. 4 das Vorsehen von jeweils einer, im Beispielsfalle halbkugelförmigen Rastnase 9 an den stirnseitigen Enden der Synchronplatten 6 bzw. 7, die im Einbauzustand in die entsprechenden Rastiemuten 10 der Schaltmuffe 3 eingreifen, wobei sie in diese Eingriffsposition durch das Federelement 8 vorgespannt werden.

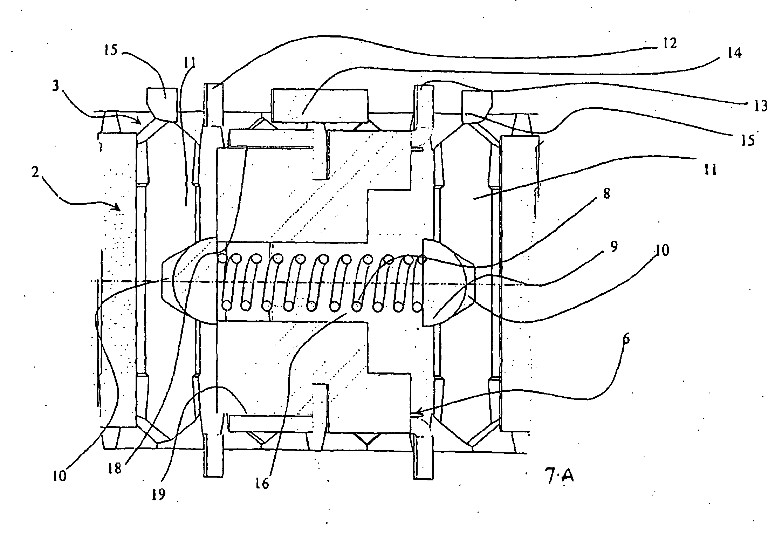

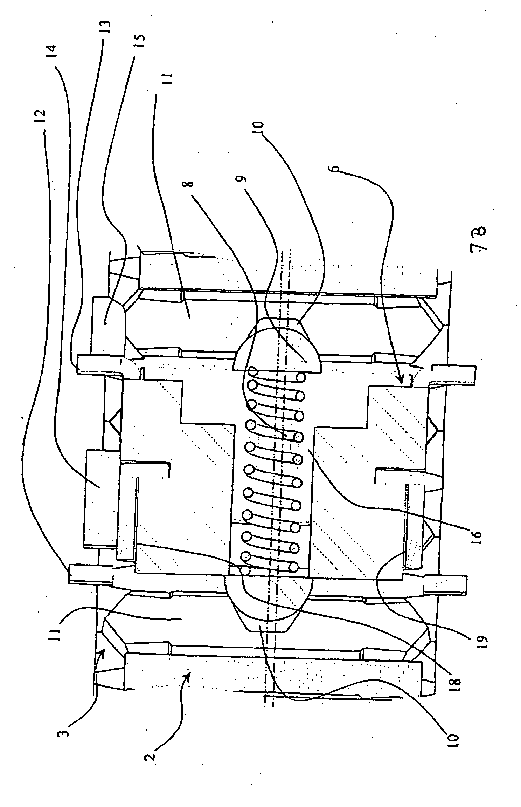

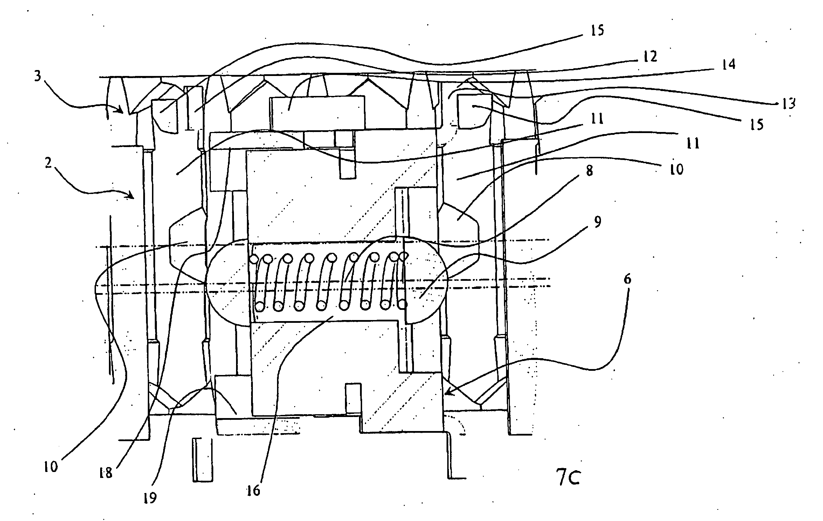

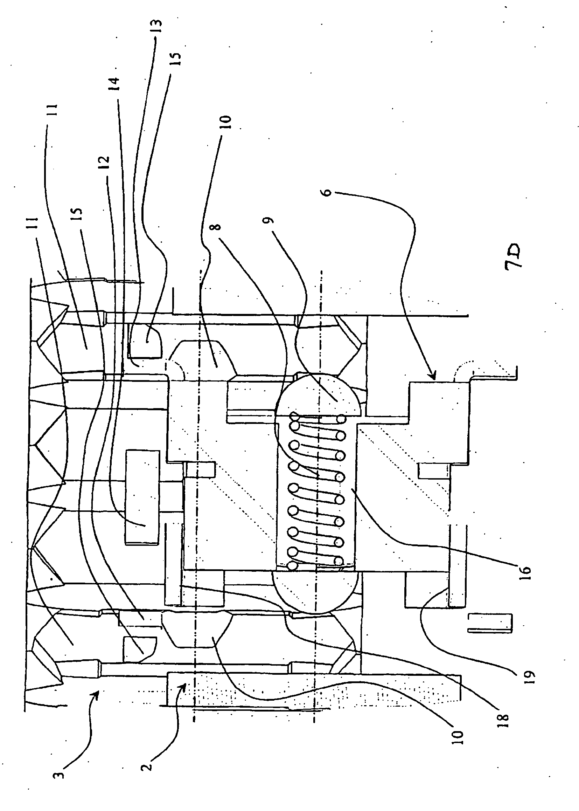

Aus den Fig. 7A, 7B, 7C und 7D ergibt sich, dass die Vorsynchronlaschen 14 des Synchronringes 4 die Bewegung des Sperrschiebesteines 5 in Richtung Losrad begrenzen, wobei die Rotationsbewegung des Synchronringes 4 zu den anderen Bauteilen der Synchronisiereinrichtung 1 von den Eingriffsnocken 12 und 13 und von den Synchronlaschen 15 begrenzt wird.

In den Fig. 7A, 7B, 7C und 7D sind ferner die Synchronphasen der Synchronisierung zu erkennen.

In Ergänzung zur voranstehenden schriftlichen Offenbarung der Erfindung wird hiermit explizit auf deren zeichnerische Darstellung in den Fig. 1-7 Bezug genommen.

### Bezugszeichenliste

- 1: Synchronisiereinrichtung
- 2: Führungsmuffe
- 3: Schaltmuffe
- 4: Synchronring
- 5: Sperrschiebestein
- 6, 7: Synchronplatte
- 8: Federelement
- 9: Rastnase
- 10: Rastiernut
- 11: Führungsverzahnung
- 12-13: Eingriffsnocken
- 14: Vorsynchronlasche
- 15: Synchronlasche
- 16: Mittelabschnitt
- 18-19: Plattenführung

## Patentansprüche

1. Synchronisiereinrichtung (1) für ein Schaltgetriebe
- mit einer Getriebewelle
- mit einer Führungsmuffe (2), die auf der Getriebewelle angeordnet ist,
- mit einer auf der Führungsmuffe (2) geführten Schaltmuffe (3), die eine Führungsverzahnung (11) aufweist, und
- mit zumindest einem Synchronring (4),
**dadurch gekennzeichnet,**
- **dass** die Schaltmuffe (3) mit einem Sperrschiebestein (5) versehen ist, der zwei zusammenfügbare und relativ zueinander bewegliche Synchronplatten (6, 7) aufweist, die mittels eines Federelements (8) auseinandergedrückt gehalten sind und hierbei in Rastiemuten (10) der Führungsverzahnung (11) der Schaltmuffe (3) eingreifen, wobei die Synchronplatten (6, 7) jeweils zwei Eingriffsnocken (12-13) aufweisen.

2. Synchronisiereinrichtung nach Anspruch 1, **dadurch gekennzeichnet, dass** der Synchronring (4) Vorsynchronlaschen (14) und Synchronlaschen (15) aufweist

3. Synchronisiereinrichtung nach Anspruch 1 oder 2, **dadurch gekennzeichnet, dass** die Synchronplatten (6, 7) jeweils einen trogartig mit einem kegelstumpfförmigen Querschnitt versehene Mittelabschnitt (16) zur Aufnahme des Federelements (8) aufweisen.

4. Synchronisieieinrtchtung nach einem der Ansprüche 1 bis 3, **dadurch gekennzeichnet, dass** die Synchronptatten (6, 7) halbkugetförmige Rastnase (9) aufweisen.

5. Synchronisiereinrichtung nach Anspruch 4, **dadurch gekennzeichnet, dass** die Rastnasen (9) am Mittelabschnitt (16) angeordnet sind.

6. Synchronisiereinrichtung nach einem der Ansprüche 1 bis 5, **dadurch gekennzeichnet, dass** die Rastiernuten (10) an die Form der Rastnasen (9) angepasst sind.

7. Synchronisiereinrichtung nach einem der Ansprüche 1 bis 5, **dadurch gekennzeichnet, dass** die Eingriffsnocken (12-13) blockartig ausgebildet sind.

8. Synchronisiereinrichtung nach einem der Ansprüche 1 bis 7, **dadurch gekennzeichnet, dass** das Federelement (8) als Schraubendruckfeder ausgebildet ist.

9. Synchronisiereinrichtung nach einem der Ansprüche 1 bis 8, **dadurch gekennzeichnet, dass** die Rotationsbewegung des Synchronringes (4) zu den anderen Bauteilen der Synchroneinrichtung (1) von den Eingriffsnocken (12 und 13) und von der Synchronlasche (15) begrenzt wird.

10. Sperrschiebestein (5) für eine für ein Schaltgetriebe vorgesehene Synchronisiereinrichtung (1), die eine Schaltmuffe (3) autweist, **gekennzeichnet**
- **durch** zwei zusammenfügbare und retativ zueinander bewegliche Synchronplatten (6, 7), die mittels eines Federelements (8) zum Eingriff in Rastiernuten (10) der Schaltmuffe (3) auseinandergedrückt gehalten sind und jeweils zwei Eingriffsnocken (12-13) aufweisen.

11. Sperrschiebestein nach Anspruch 10, **gekennzeichnet durch** wenigstens eines der Merkmale des Sperrschiebesteines der Ansprüche 3, 4, 5, 7 und/oder 8.

## Claims

1. A synchronizing device (1) for a manual gearbox, comprising
- a gearbox shaft,
- a guide sleeve (2) arranged on the gearbox shaft,
- a shift collar (3) guided on the guide sleeve (2) and including guide teeth (11), and
- at least one synchronizer ring (4),
**characterized in that**
- the shift collar (3) is provided with a locking sliding block (5) which includes two synchronizer plates (6, 7) which are adapted to be joined together and are movable relative to each other and are held pushed apart by means of a spring member (8) to engage into locking grooves (10) of the guide teeth (11) of the shift collar (3), each of the synchronizer plates (6, 7) including two engagement cams (12-13).

2. The synchronizing device according to claim 1, **characterized in that** the synchronizer ring (4) includes pre-synchronizing tongues (14) and synchronizing tongues (15).

3. The synchronizing device according to claim 1 or 2, **characterized in that** the synchronizer plates (6, 7) each include a middle section (16) which is provided with a trough-like frustoconical cross-section for receiving the spring member (8).

4. The synchronizing device according to any of claims 1 to 3, **characterized in that** the synchronizer plates (6, 7) include hemispherical latching noses (9).

5. The synchronizing device according to claim 4, **characterized in that** the latching noses (9) are arranged on the middle section (16).

6. The synchronizing device according to any of claims 1 to 5, **characterized in that** the locking grooves (10) are adapted to the shape of the latching noses (9).

7. The synchronizing device according to any of claims 1 to 5, **characterized in that** the engagement cams (12-13) are of a block-type design.

8. The synchronizing device according to any of claims 1 to 7, **characterized in that** the spring member (8) is in the form of a helical compression spring.

9. The synchronizing device according to any of claims 1 to 8, **characterized in that** the rotary motion of the synchronizer ring (4) in relation to the other components of the synchronizing device (1) is limited by the engagement cams (12 and 13) and by the synchronizing tongue (15).

10. A locking sliding block (5) for a synchronizing device (1) which is provided for a manual gearbox and includes a shift collar (3), **characterized by**
- two synchronizer plates (6, 7) which are adapted to be joined together and are movable relative to each other and are held pushed apart by means of a spring member (8) for engagement into locking grooves (10) of the shift collar (3) and each include two engagement cams (12-13).

11. The locking sliding block according to claim 10, **characterized by** at least one of the features of the locking sliding block of claims 3, 4, 5, 7 and/or 8.

## Revendications

1. Dispositif de synchronisation (1) pour boîte de vitesses, comportant
- un arbre de boîte de vitesses,
- un manchon de guidage (2) agencé sur l'arbre de boîte de vitesses,
- un manchon de changement de vitesse (3) guidé sur le manchon de guidage (2) et présentant une denture de guidage (11), et
- au moins une bague de synchronisation (4),
**caractérisé en ce que**
- le manchon de changement de vitesse (3) est pourvu d'un coulisseau de blocage (5) qui présente deux plaques de synchronisation (6, 7) aptes à être reliées l'une à l'autre et mobiles l'une par rapport à l'autre, lesquelles sont maintenues poussées à distance l'une de l'autre au moyen d'un élément ressort (8) et s'engagent ainsi dans des gorges de verrouillage (10) de la denture de guidage (11) du manchon de changement de vitesse (3), les plaques de synchronisation (6, 7) présentant chacune deux cames d'engrènement (12-13).

2. Dispositif de synchronisation selon la revendication 1, **caractérisé en ce que** la bague de synchronisation (4) présente des languettes de présynchronisation (14) et des languettes de synchronisation (15).

3. Dispositif de synchronisation selon la revendication 1 ou 2, **caractérisé en ce que** les plaques de synchronisation (6, 7) présentent chacune un tronçon central (16) pourvu à la manière d'une auge d'une section transversale tronconique pour la réception de l'élément ressort (8).

4. Dispositif de synchronisation selon l'une des revendications 1 à 3, **caractérisé en ce que** les plaques de synchronisation (6, 7) présentent des ergots d'enclenchement (9) hémisphériques.

5. Dispositif de synchronisation selon la revendication 4, **caractérisé en ce que** les ergots d'enclenchement (9) sont agencés sur le tronçon central (16).

6. Dispositif de synchronisation selon l'une des revendications 1 à 5, **caractérisé en ce que** les gorges de verrouillage (10) sont adaptées à la forme des ergots d'enclenchement (9).

7. Dispositif de synchronisation selon l'une des revendications 1 à 5, **caractérisé en ce que** les cames d'engrènement (12-13) sont réalisées en bloc.

8. Dispositif de synchronisation selon l'une des revendications 1 à 7, **caractérisé en ce que** l'élément ressort (8) est réalisé sous forme de ressort de compression hélicoïdal.

9. Dispositif de synchronisation selon l'une des revendications 1 à 8, **caractérisé en ce que** le mouvement rotatif de la bague de synchronisation (4) par rapport aux autres composants du dispositif de synchronisation (1) est limité par les cames d'engrènement (12 et 13) et par la languette de synchronisation (15).

10. Coulisseau de blocage (5) pour un dispositif de synchronisation (1) prévu pour une boîte de vitesses et présentant un manchon de changement de vitesse (3), **caractérisé par**
- deux plaques de synchronisation (6, 7) aptes à être reliées l'une à l'autre et mobiles l'une par rapport à l'autre, lesquelles sont maintenues poussées à distance l'une de l'autre au moyen d'un élément ressort (8) pour un engrenage dans les gorges de verrouillage (10) du manchon de changement de vitesse (3) et présentent chacune deux cames d'engrènement (12-13).

11. Coulisseau de blocage selon la revendication 10, **caractérisé par** au moins l'une des caractéristiques du coulisseau de blocage selon les revendications 3, 4, 5, 7 et/ou 8.
